# FASCICULE DE BREVET EUROPEEN

(11) **EP 3 929 809 B1**
(45) Date de publication et mention de la délivrance du brevet: **30.09.2026**
(21) Numéro de dépôt: 21181536.0
(22) Date de dépôt: 24.06.2021
(51) Int. Cl.: G06V 40/12, G06N 3/0464, G06N 3/09

(54) **PROCÉDÉ DE DÉTECTION D'AU MOINS UN TRAIT BIOMÉTRIQUE VISIBLE SUR UNE IMAGE D ENTRÉE AU MOYEN D'UN RÉSEAU DE NEURONES À CONVOLUTION**
METHODE ZUR ERKENNUNG VON MINDESTENS EINEM SICHTBAREN BIOMETRISCHEN MERKMAL AUF EINEM EINGANGSBILD MITTELS EINES KONVOLUTIONALEN NEURALEN NETZWERKS
METHOD OF DETECTION OF AT LEAST ONE VISIBLE BIOMETRIC TRAIT ON AN INPUT IMAGE BY MEANS OF A CONVOLUTIONAL NEURAL NETWORK

(30) Priorité: 26.06.2020 FR 2006730
(43) Date de publication de la demande: 29.12.2021
(73) Titulaire: IDEMIA Public Security France, 92400 Courbevoie (FR)
(72) Inventeur: KAZDAGHLI, Laurent, 92400 COURBEVOIE (FR); MABYALAHT, Guy, 92400 COURBEVOIE (FR)
(74) Mandataire: IPS

(56) Documents cités:
- EP-A1- 3 640 843
- OUYANG JIAHONG ET AL: "Fingerprint pose estimation based on faster R-CNN", 2017 IEEE INTERNATIONAL JOINT CONFERENCE ON BIOMETRICS (IJCB), IEEE, 1 October 2017 (2017-10-01), pages 268 - 276, XP033308623, DOI: 10.1109/BTAS.2017.8272707
- TANG SIQI ET AL: "An Efficient Slap Fingerprint Segmentation Algorithm Based on Convnets and Knuckle Line", 20 October 2017, BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, ISBN: 978-3-642-17318-9, XP047451335
- LI LINHAO ET AL: "A Novel CNN-Based Method for Accurate Ship Detection in HR Optical Remote Sensing Images via Rotated Bounding Box", IEEE TRANSACTIONS ON GEOSCIENCE AND REMOTE SENSING, 8 May 2020 (2020-05-08), pages 686 - 699, XP055782272, Retrieved from the Internet <URL:https://arxiv.org/pdf/2004.07124.pdf> [retrieved on 20210304], DOI: 10.1109/TGRS.2020.2995477
- JANA ARKA PRAVA ET AL: "YOLO based Detection and Classification of Objects in video records", 2018 3RD IEEE INTERNATIONAL CONFERENCE ON RECENT TRENDS IN ELECTRONICS, INFORMATION & COMMUNICATION TECHNOLOGY (RTEICT), IEEE, 18 May 2018 (2018-05-18), pages 2448 - 2452, XP033724857, DOI: 10.1109/RTEICT42901.2018.9012375

## Description

### DOMAINE TECHNIQUE GENERAL

La présente invention concerne le domaine de la biométrie, et propose en particulier un procédé de détection d'au moins un trait biométrique visible sur une image d'entrée au moyen d'au moins un réseau de neurones à convolution, ainsi qu'un procédé d'apprentissage du réseau de neurones à convolution.

### ETAT DE L'ART

Les réseaux de neurones sont massivement utilisés pour la classification de données.

Après une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de classification qui est l'analyse d'image, ils permettent en effet avec efficacité la reconnaissance d'objets ou de personnes dans des images ou des vidéos, en particulier dans des applications de sécurité (surveillance automatique, détection de menace, etc.).

On connait tout particulièrement une utilisation des CNN dans le domaine de l'authentification/identification biométrique. En effet, un CNN peut être entraîné à reconnaitre un individu sur la base de traits biométriques de cet individu tels que les empreintes digitales (reconnaissance digitale), l'iris ou le visage (reconnaissance faciale). Dans la mesure où ces données sont manipulées sous formes d'images, le CNN s'avère très efficace.

Les approches biométriques classiques utilisent les informations caractéristiques du trait biométrique extraites à partir de la biométrie acquise, appelées « features », et l'apprentissage/classification est réalisé sur la base de la comparaison de ces caractéristiques.

En particulier, dans le cas de la reconnaissance digitale, les images d'extrémité de doigt sont traitées de sorte à extraire les caractéristiques d'une empreinte. On appelle ainsi un « codage » le procédé d'extraction des caractéristiques d'une empreinte (sous la forme de cartes de caractéristiques, ou « feature maps »), lesquelles permettent de composer une signature appelée « template » encodant l'information utile à la phase finale de classification. Plus précisément, on va réaliser la classification par comparaison des cartes de caractéristiques obtenues avec une ou plusieurs carte(s) de caractéristiques de référence associée(s) à des individus connus.

Les approches récentes dans le domaine de l'apprentissage profond ont permis des avancées majeures, et aujourd'hui il est possible y compris pour la reconnaissance digitale (qui est la plus complexe) d'éviter la phase de codage et de parvenir à réaliser directement l'apprentissage/classification sur la base des données biométriques, i.e. de représenter la biométrie par un vecteur réduit sans qu'il ne soit plus nécessaire d'extraire explicitement les caractéristiques, voir par exemple la demande FR3088467 pour la reconnaissance digitale. OUYANG JIAHONG ET AL: "Fingerprint pose estimation based on faster R-CNN",2017 IEEE INTERNATIONAL JOINT CONFERENCE ON BIOMETRICS (IJCB), IEEE, 1 octobre 2017, pages 268-276, DOI: 10.1109/BTAS.2017.8272707 présente une méthode basée sur l'apprentissage profond permettant d'obtenir une estimation précise de la pose.

EP 3 640 843 A1 divulgue un procédé d'extraction de caractéristiques recherchées d'une empreinte digitale représentée par une image d'entrée, en vue d'un traitement biométrique de l'image d'entrée.

TANG SIQI ET AL: "An Efficient Slap Fingerprint Segmentation Algorithm Based on Convnets and Knuckle Line", 20 octobre 2017, BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE,ISBN: 978-3-642-17318-9 décrit une technique permettant d'extraire des empreintes digitales individuelles d'une image de paume et de les attribuer aux index correspondants.

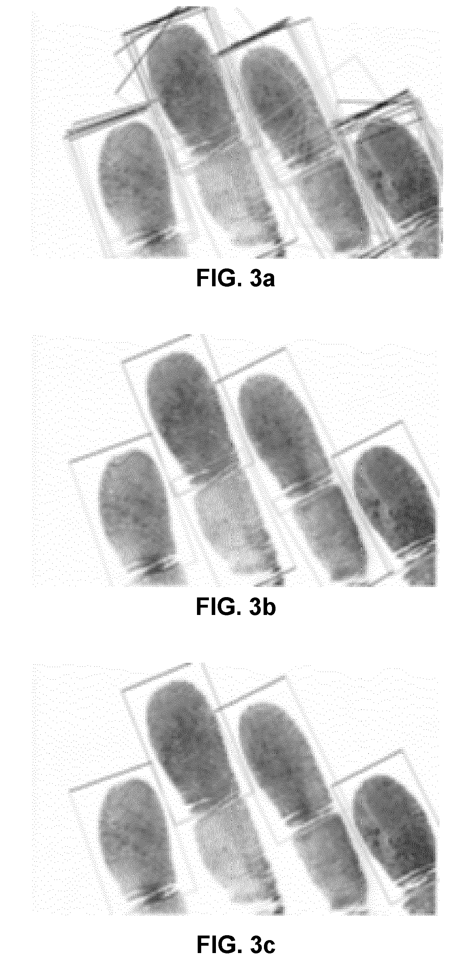

Cependant, si cela fonctionne pour une image dans laquelle le trait biométrique est « isolé » (photo du visage, ou d'une unique empreinte digitale), les algorithmes connus ont encore des difficultés lorsqu'il y a potentiellement plusieurs traits biométriques et qu'il faut les localiser. Typiquement, c'est le cas lorsque l'image d'entrée représente toute une main posée sur un capteur (voir figures 3a-3c), ce que l'on appelle des « slaps ». Typiquement, pour la prise d'empreintes pour un passeport on a trois prises de vue : une des quatre doigts longs de la main gauche, une des quatre doigts longs de la main droite, et une deux pouces côte à côte.

La solution, est au lieu de traiter directement l'image d'entrée comme image d'un trait biométrique, de mettre en œuvre un algorithme de détection qui va permettre d'extraire en tant que régions d'intérêt de l'image les traits biométriques visibles.

On connait des CNN tels que ceux des familles YOLO ou RCNN capables de mettre en oeuvre une telle détection à base de régions d'intérêt. Ces CNN « proposent » des régions potentiellement d'intérêt d'une image (sous la forme d'une boite), qui sont filtrées pour sélection plus fine. Ces modèles performants apportent satisfaction pour identifier des entités variées au milieu d'images (par exemple des animaux, des personnes, des véhicules, etc.) mais sont insuffisants pour la biométrie et en particulier dans l'exemple mentionné ci-avant de slaps, car ils détectent de façon incorrecte des traces d'anciennes empreintes sur le capteur ou des phalanges, ou bien des empreintes correctes mais mal orientées (la main peut être de travers voire même complètement à l'envers si le capteur est posé sur une table), et les réseaux précités ne sont pas du tout robustes à de telles variations d'orientation. Enfin, ces réseaux confondent les doigts entre eux.

Une piste serait d'ajouter dans les images d'apprentissage des classes « trace » et « phalange » avec les annotations correspondantes pour que les CNN apprennent à distinguer ces objets des vraies empreintes, mais un tel travail serait extrêmement fastidieux et ne résoudrait pas les autres problèmes.

Il serait par conséquent souhaitable de disposer d'une nouvelle solution de traitement d'images complexes représentatives d'un ou plusieurs traits biométriques, qui soit performante et robuste, tout en restant légère.

### PRESENTATION DE L'INVENTION

Selon un premier aspect, la présente invention concerne un procédé de détection, selon la revendication 1, d'au moins un trait biométrique visible sur une image d'entrée, au moyen d'un réseau de neurones à convolution, CNN, le procédé étant caractérisé en ce qu'il comprend la mise en oeuvre, par des moyens de traitement de données d'un client, d'étapes de :
(a) Génération, au moyen d'un bloc d'extraction de caractéristiques dudit CNN, d'une pluralité de vecteurs de représentation chacun définissant une région d'intérêt candidate de ladite image d'entrée contenant potentiellement un trait biométrique, le vecteur de représentation d'une région d'intérêt candidate comprenant au moins une valeur de position de la région d'intérêt candidate, au moins une valeur de taille de la région d'intérêt candidate, une valeur d'orientation de la région d'intérêt candidate, et un score d'objectivité de la région d'intérêt candidate ;
(b) Sélection, au moyen d'un bloc de filtrage dudit CNN, d'au moins une région d'intérêt parmi lesdites régions candidates en fonction de leurs vecteurs de représentation.

Selon des caractéristiques avantageuses et non limitatives :
Lesdites traits biométriques sont choisis parmi des empreintes digitales, des visages et des iris, en particulier des empreintes digitales.

Chaque région d'intérêt candidate forme une boite englobante.

Le vecteur de représentation d'une région d'intérêt candidate comprend deux valeurs de position de la région d'intérêt candidate qui sont les coordonnées du centre de la boite englobante, deux valeurs de taille de la région d'intérêt candidate qui sont sa hauteur et sa largeur.

La valeur d'orientation de la région d'intérêt candidate définit un angle de rotation de la boite englobante par rapport à une orientation de référence.

Le vecteur de représentation d'une région d'intérêt candidate comprend en outre, pour au moins une classe possible du trait biométrique, un score de probabilité d'appartenance du trait biométrique de la région d'intérêt à ladite classe.

Lesdites classes désignent les doigts des mains.

L'étape (b) comprend la suppression des régions d'intérêt candidates présentant dans leur vecteur de représentation un score d'objectivité inférieur à un seuil prédéterminé ;
et/ou la sélection, parmi au moins un groupe de régions d'intérêt candidates susceptibles de contenir un même trait biométrique, de la région d'intérêt candidate avec le score d'objectivité le plus élevé ; deux région d'intérêt candidate étant en particulier susceptibles de contenir un même trait biométrique si elles présentent un critère de Jaccard supérieur à un seuil prédéterminé.

L'étape (b) comprend, pour au moins une région d'intérêt candidate, l'estimation d'un score de qualité de la région d'intérêt candidate, ledit score étant représentatif de la probabilité que ladite région d'intérêt candidate représente un trait biométrique, indépendamment du score d'objectivité déjà connu ; ladite sélection d'au moins une région d'intérêt parmi lesdites régions candidates étant en fonction dudit score de qualité.

L'étape (b) comprend, pour au moins une région d'intérêt candidate, l'estimation d'une valeur d'orientation du trait biométrique contenu dans la région d'intérêt candidate, indépendamment de la valeur d'orientation de ladite région d'intérêt candidate déjà connue, de sorte à corriger cette valeur d'orientation de ladite région d'intérêt candidate.

Le procédé comprend une étape (a0) préalable d'apprentissage, par des moyens de traitement de données d'un serveur, des paramètres du bloc d'extraction de caractéristiques dudit CNN, à partir d'une base d'images d'apprentissage sur lesquelles les traits biométriques sont déjà détectés, en utilisant une fonction de coût comprenant un terme de régression sur l'orientation de la région d'intérêt candidate.

Ladite fonction de coût comprend :
- un premier terme de régression sur l'au moins une valeur de position de la région d'intérêt candidate ;
- un deuxième terme de régression sur l'au moins une valeur de taille de la région d'intérêt candidate ;
- un troisième terme de régression sur le score d'objectivité de la région d'intérêt candidate ;
- un quatrième terme de régression sur l'orientation de la région d'intérêt candidate ;
- un éventuel cinquième terme de régression sur une classe de la région d'intérêt candidate.

Selon un deuxième aspect l'invention, selon la revendication 12, concerne un procédé d'apprentissage des paramètres d'un bloc d'extraction de caractéristiques d'un réseau de neurones à convolution, CNN, par des moyens de traitement de données d'un serveur, pour détection d'au moins un trait biométrique visible sur une image d'entrée, le procédé étant mis en œuvre à partir d'une base d'images d'apprentissage sur lesquelles les traits biométriques sont déjà détectés, le bloc d'extraction de caractéristiques générant pour une image d'entrée une pluralité de vecteurs de représentation chacun définissant une région d'intérêt candidate de ladite image d'entrée contenant potentiellement un trait biométrique ;
le procédé étant caractérisé en ce qu'il utilise une fonction de coût comprenant un terme de régression sur l'orientation de la région d'intérêt candidate, le vecteur de représentation d'une région d'intérêt candidate comprenant au moins une valeur de position de la région d'intérêt candidate, au moins une valeur de taille de la région d'intérêt candidate, une valeur d'orientation de la région d'intérêt candidate, et un score d'objectivité de la région d'intérêt candidate.

Selon un troisième et un quatrième aspect, selon les revendications 13 et 14, l'invention concerne un produit programme d'ordinateur comprenant des instructions de code pour l'exécution d'un procédé selon le premier ou le deuxième aspect de détection d'au moins un trait biométrique visible sur une image d'entrée, ou d'apprentissage de paramètres d'un réseau de neurones à convolution, CNN ; et un moyen de stockage lisible par un équipement informatique sur lequel un produit programme d'ordinateur comprenant des instructions de code pour l'exécution d'un procédé selon le premier ou le deuxième aspect de détection d'au moins un trait biométrique visible sur une image d'entrée, ou d'apprentissage de paramètres d'un réseau de neurones à convolution, CNN, lorsque ledit programme est exécuté sur un ordinateur.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- La figure 1 est un schéma d'une architecture pour la mise en oeuvre du procédé selon l'invention ;
- La figure 2 représente les étapes d'un mode de réalisation préféré du procédé selon l'invention ;
- La figure 3a illustre un premier exemple de résultat de détection sur une image d'entrée ;
- La figure 3b illustre un deuxième exemple de résultat de détection sur une image d'entrée ;
- La figure 3c illustre un troisième exemple de résultat de détection sur une image d'entrée.

### DESCRIPTION DETAILLEE

### Architecture

Selon deux aspects complémentaires de l'invention, sont proposés :
- un procédé de détection d'au moins un trait biométrique visible dans une image d'entrée au moyen d'un réseau de neurones à convolution (CNN) ;
- un procédé d'apprentissage de paramètres du CNN.

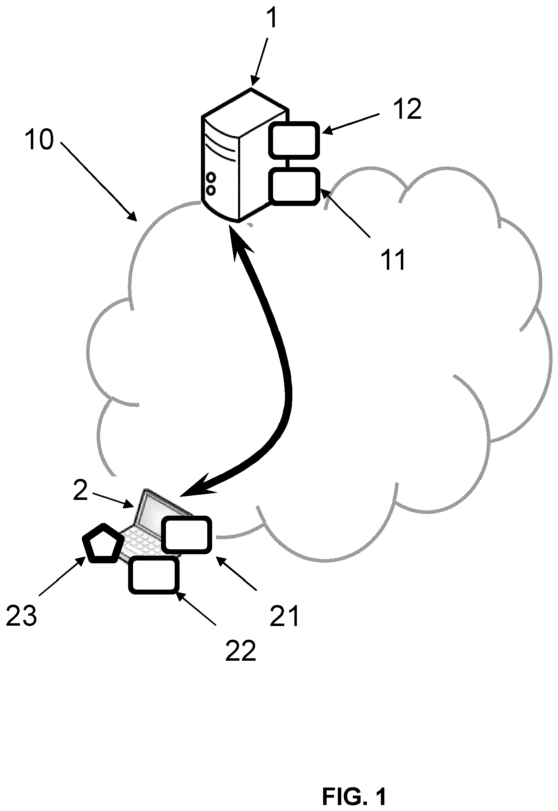

Les présents procédés sont mis en œuvre au sein d'une architecture telle que représentée par la **Figure 1****,** grâce à un serveur 1 et un client 2. Le serveur 1 est l'équipement d'apprentissage (mettant en œuvre le procédé d'apprentissage) et le client 2 est un équipement de classification (mettant en œuvre le procédé de classification), par exemple un terminal d'un utilisateur. Il est tout à fait possible que les deux équipements 1, 2 soient confondus.

Dans tous les cas, chaque équipement 1, 2 est typiquement un équipement informatique distant relié à un réseau étendu 10 tel que le réseau internet pour l'échange des données. Chacun comprend des moyens de traitement de données 11, 21 de type processeur, et des moyens de stockage de données 12, 22 telle qu'une mémoire informatique, par exemple un disque.

Le serveur 1 stocke une base de données d'apprentissage, i.e. un ensemble de données déjà annotées (par opposition aux données dites d'entrée que l'on cherche justement à classifier), c'est-à-dire que les traits biométriques ont été détectés sous la forme de région d'intérêt de référence, mis en évidence et le cas échéant étiquetés avec la catégorie de trait biométrique correspondante (voir plus loin), on verra des exemples plus loin.

En effet, les données d'entrée ou d'apprentissage sont de type image, et sont représentatives d'au moins un trait biométrique (en d'autres termes il s'agit d'images du ou des traits biométriques, i.e. sur lesquelles le ou les traits biométriques sont visibles), avantageusement choisi(s) parmi une empreinte digitale, un visage et un iris de l'utilisateur, de façon préféré une empreinte digitale (comme l'on verra, le présent procédé est tout particulièrement efficace dans ce dernier cas). De manière préférée, les images d'entrée ou d'apprentissage représentent une pluralité de traits biométriques, i.e. le présent procédé selon le premier aspect est un procédé de détection d'une pluralité de traits biométrique (au moins deux) visibles dans une seule image d'entrée, qui en pratique peut-être une image « complexe » montrant bien plus que le simple trait biométrique. Pour la détection de visage, on peut avoir une image d'une scène complète avec une personne entière visible, et pour détection d'empreinte digitale on peut avoir une image de tout ou partie de la main de l'utilisateur. Dans la suite de la présente description on prendra, dans le cas de reconnaissance digitale, trois exemples principaux de slaps :
- image des quatre doigts longs (index, majeur, annulaire, auriculaire) de la main gauche ;
- image des quatre doigts longs (index, majeur, annulaire, auriculaire) de la main droite ;
- image des deux pouces des deux mains (gauche et droite) côte à côte.

Ladite base d'images d'empreinte contient ainsi préférentiellement un grand nombre de ces trois types d'images annotées.

La « détection », ou « reconnaissance », est une opération basique, et désigne le simple marquage d'un trait biométrique dans l'image. La détection combine ainsi l'identification d'un trait biométrique en tant qu'élément d'intérêt et sa localisation (définition d'une région d'intérêt contenant le trait biométrique, en particulier une boite englobante dite « bounding box », voir plus loin).

De manière préférée, la détection d'un trait biométrique comprend également sa classification, en particulier parmi plusieurs catégories différentes du type de trait biométrique, en particulier à quel doigt appartient une empreinte si le trait biométrique est une empreinte digitale. Par exemple une empreinte digitale détectée pourra être classée parmi « pouce, index, majeur, auriculaire ou annulaire », et ce « gauche ou droit » (10 classes au total).

De manière particulière préférée, et comme on le verra plus loin, le procédé selon le premier aspect peut comprendre en outre une reconnaissance d'un individu présentant la ou les traits biométriques visibles (authentification ou identification de l'individu par reconnaissance de sa ou ses traits biométrique), i.e. il s'agit d'une image d'une partie du corps de cet individu (typiquement sa main comme expliqué).

### Procédé

L'idée du présent procédé est d'utiliser des réseaux de neurones à convolution (CNN) de détection connus, en particulier YOLO ou RCNN (dans la suite de la présente description on prendra l'exemple de YOLO, en particulier dans son implémentation MobileNet V2), mais en leur donnant une capacité à estimer une orientation d'une région d'intérêt.

Plus précisément, de manière connue les CNN de détection comprennent un bloc d'extraction de caractéristiques (ou bloc de codage) identifiant des régions d'intérêts candidates d'une image en entrée, et plus précisément générant des vecteurs de représentation de chacune de ces régions d'intérêt candidates (généralement une pluralité, en particulier SxSxB pour YOLO, avec SxS le nombre de cellules de l'image d'entrée - par exemple 7x7 - et B le nombre de régions d'intérêts candidates possibles par cellule - par exemple 1 ou 2).

Ce vecteur de représentation comprend une pluralité de paramètres définissant la région d'intérêt candidate correspondant, dont au moins une valeur de position de la région d'intérêt candidate, au moins une valeur de taille de la région d'intérêt candidate, et un score d'objectivité de la région d'intérêt candidate.

En ce qui concerne les valeurs de taille et de position, il y a de nombreuses possibilités selon la forme géométrique de la région d'intérêt.

De manière préférée chaque région d'intérêt est un polygone et en particulier un rectangle, i.e. forme une boite englobante, et alors on a typiquement deux valeurs de position x et y (coordonnées du centre de la boite) et deux valeurs de taille w et h (hauteur et largeur de la boite). Généralement ces valeurs sont entre 0 et 1 (i.e. normalisées par la taille de l'image d'entrée).

Le score d'objectivité C, ou score de confiance, est représentatif de la probabilité de présence d'un trait biométrique dans la région d'intérêt correspondante. Comme l'on verra plus loin, si l'on met en œuvre une classification, le vecteur peut en outre comprendre d'autres scores et notamment des probabilités P(c) d'appartenance du trait biométrique de la région d'intérêt à diverses classes possibles (dites probabilités conditionnelles de classe) ou bien directement le numéro de la classe avec la probabilité la plus élevée.

Il est ainsi bien connu pour YOLO d'avoir pour une région d'intérêt le vecteur (x, y, w, h, C), outre les éventuels scores de classes.

Le présent procédé propose d'y rajouter une valeur d'orientation θ de la région d'intérêt candidate. Plus précisément, alors que traditionnellement les boites ont toutes la même orientation (la même que l'image, i.e. avec les côtés parallèles à ceux de l'image, dans la mesure où YOLO est conçu pour traiter des images de scènes ordinaires avec le sol horizontal en ce cas), le présent procédé autorise la rotation des boites de sorte à permettre la détection des empreintes aussi efficacement même si elles sont mal orientées, ce qui comme expliqué arrive très souvent pour les images de slaps par exemple. On voit par exemple sur la **Figure 3a** que cela permet de proposer plusieurs régions d'intérêt candidates pour une empreinte qui ne diffèrent que par leur orientation.

On comprendra ainsi que la valeur d'orientation θ de la région d'intérêt candidate n'est pas par exemple une simple estimation de l'orientation du trait biométrique contenu dans la région d'intérêt, mais bien une valeur définissant l'orientation de la région d'intérêt en tant que forme géométrique. On peut ainsi avoir des régions d'intérêt « réorientées », notamment par une rotation, par exemple des boites englobantes inclinées et non plus avec les côtés parallèles à l'image. Le résultat est ainsi que, si θ est bien choisi, le trait biométrique peut in fine être orienté de manière correcte dans la région d'intérêt candidate même s'il ne l'était pas dans l'image. A noter que la présente invention n'exclut pas une estimation ultérieure de l'orientation du trait biométrique contenu dans la région d'intérêt (potentiellement réorientée), à des fins de vérification (voir plus loin).

On comprend que ladite orientation θ s'entend par rapport à une orientation dite de référence correspondant à une orientation arbitrairement choisie, et définissant une orientation « normale » des régions d'intérêt (typiquement boites englobantes avec des côtés parallèles à l'image). En d'autres termes, θ est ainsi un angle de rotation, i.e. un écart d'orientation : si θ=0, la région d'intérêt présente l'orientation de référence.

De manière préférée, ladite orientation de référence coïncide avec une orientation optimale du trait biométrique dans l'image, c'est-à-dire celle dans laquel le trait est « bien orienté », correspondante à l'orientation habituelle dans les bases biométriques de référence. Par exemple, dans le cas d'empreintes digitales, l'orientation optimale est celle dans laquelle le doigt est vertical et dirigé vers le haut, dite « Nord-Sud », i.e. l'orientation naturelle lorsque l'on presse le doigt sur un capteur dans de bonnes conditions, correspondant à celle habituelle des bases d'empreintes de référence. Dans le cas d'un iris ou d'un visage, l'orientation optimale est celle dans lequel le visage a le menton en bas et le front en haut. On sait que les traits biométriques présentant sensiblement l'orientation optimale seront les plus faciles à détecter car c'est l'orientation attendue par le CNN.

Le fait que l'orientation de référence et l'orientation optimale coïncident signifie que lorsqu'un trait biométrique présente ladite orientation optimale dans l'image, il présente toujours cette orientation optimale dans une région d'intérêt candidate présentant l'orientation de référence (i.e. ayant une valeur d'orientation égale à 0), et donc il sera facile à détecter. On comprend donc similairement que lorsqu'un trait biométrique ne présente pas ladite orientation optimale dans l'image, il ne présente pas cette orientation optimale dans une région d'intérêt candidate présentant l'orientation de référence, mais on peut trouver une valeur d'orientation θ telle que le trait biométrique présente par contre cette orientation optimale dans une région d'intérêt candidate présentant une orientation conformément à la valeur d'orientation θ (i.e. pivotée de θ par rapport à l'orientation de référence).

La valeur d'orientation θ peut donc exprimée comme une valeur d'angle, par exemple dans le sens trigonométrique (positif lorsque la région d'intérêt est tournée dans le sens inverse des aiguilles d'une montre, négatif sinon).

Elle peut être par exemple choisie dans une plage [0°, 360°] ou une plage [-180°, +180°] de manière équivalente. Par ailleurs, une plage d'étendue 360° est préférée dans la mesure où elle correspond à l'ensemble des orientations possibles, mais on comprendra que l'on pourrait éventuellement travailler sur une plage plus réduite correspondant à l'essentiel des orientations constatées, par exemple [-45°, +45°].

En résumé, la meilleure valeur d'orientation θ d'une région d'intérêt candidate est celle telle que le trait biométrique qui y est contenu présente dans le référentiel de ladite région d'intérêt sensiblement ladite orientation optimale. Par exemple :
- pour une empreinte digitale déjà bien orientée (Nord-Sud), la région d'intérêt n'a pas besoin d'être pivotée et la meilleure valeur θ est 0 (puisque l'empreinte digitale est déjà bien orientée dans une boite « normale » i.e. présentant l'orientation de référence) ;
- pour une empreinte inclinée dans l'image d'un angle x par rapport à l'orientation optimale, la valeur θ optimale est x puisque, dans le référentiel d'une boite pivotée d'un angle θ par rapport à l'orientation de référence, l'empreinte n'est plus inclinée que de x-θ par rapport à l'orientation optimale, qui tend vers 0 (i.e. l'orientation de l'empreinte tend vers la direction Nord-Sud) lorsque θ tend vers x.

La présente solution améliore fortement les performances pour les traits biométriques « en biais », c'est-à-dire inclinés par rapport à l'orientation optimale d'un angle éloigné d'un multiple de 90° (par exemple 45°) dans le cas où les régions d'intérêt forment des boites englobantes rectangulaires. En effet, pour de telles orientations, les boites présentant l'orientation de référence (avec les côtés parallèles aux bords de l'image) sont particulièrement inadaptées. Par comparaison, un réseau du type YOLO aura moins de problèmes avec un trait biométrique incliné de 90° par rapport à l'orientation de référence (par exemple une empreinte « Est-Ouest ») car il rentrera bien dans une boite présentant l'orientation de référence même si la hauteur et la largeur seront inversées.

L'homme du métier comprendra qu'on peut néanmoins toujours partir de n'importe quelle orientation de référence ou orientation optimale.

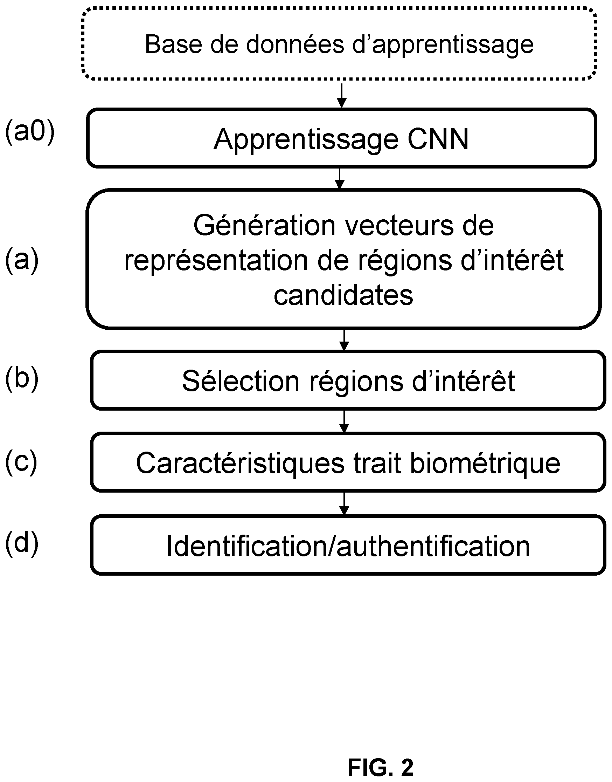

Ainsi, en référence à la **Figure 2****,** le présent procédé commence par une étape (a) de génération par les moyens de traitement de données 21 du client 2, au moyen d'un bloc dudit CNN d'extraction de caractéristiques, d'un pluralité de vecteur de représentation d'une région d'intérêt candidate de ladite image d'entrée contenant potentiellement un trait biométrique, ledit vecteur de représentation d'une région d'intérêt candidate comprenant au moins une valeur de position de la région d'intérêt candidate, au moins une valeur de taille de la région d'intérêt candidate, une valeur d'orientation de la région d'intérêt candidate, et un score d'objectivité de la région d'intérêt candidate (et préférentiellement deux valeurs de position, deux valeurs de taille, une valeur d'orientation, une valeur de score d'objectivité, [soit 6 valeurs x, y, w, h, θ, C] et des éventuels scores de classe [par exemple 10 valeurs P(c) si l'on a 10 classes correspondant aux 10 doigts]).

On comprend que l'étape (a) est une étape d'identification d'une pluralité de régions d'intérêt candidates.

Le fait de pouvoir obtenir une valeur supplémentaire dans le vecteur de représentation se fait simplement en rajoutant un filtre au moins dans le bloc final, mais on peut garder une architecture connue. Par exemple, en prenant YOLO, on peut avoir un bloc constitué d'une pluralité de couche de convolution (jusqu'à 24), dont une dernière générant en sortie un grand nombre P (par exemple 1024) de cartes de caractéristiques de taille SxS de sorte à former un bloc de taille SxSxP (i.e. on a un vecteur de taille P par cellule), suivie par deux couches entièrement connectées, la première pour « aplatir » cette sortie et la deuxième pour générer les vecteurs de représentation (i.e. sortie de taille SxSxV où V est la taille du vecteur, par exemple 16 si l'on a 1 boite par cellule et 10 classes possibles). On verra plus loin des exemples de fonctions de coût pour pouvoir entraîner le bloc d'extraction de caractéristiques d'un CNN.

Cette étape peut être directe (en une seule étape, comme dans YOLO par exemple), ou passer par une sous-étape de proposition de régions d'intérêt candidates avant l'extraction de vecteurs comme dans RCNN.

### Sélection des régions d'intérêt

On comprend qu'à l'issue de l'étape (a) on a un grand nombre de régions d'intérêt candidates, en tout cas bien plus que le nombre réel de traits biométriques visibles dans l'image, ce d'autant plus que le fait de « rallonger » le vecteur de représentation en ajoutant l'orientation augmente sa dimension, de sorte qu'on a pour un seul trait biométrique des « duplicats » de boites de tailles et orientations variées. On le voit très nettement sur la figure 3a.

Par conséquent, dans une étape (b) au moins une région d'intérêt est sélectionnée parmi lesdites régions candidates en fonction de leurs vecteurs de représentation. Il s'agit d'une étape de filtrage de la pluralité de région d'intérêt candidates identifiées (mise en œuvre par un bloc de filtrage dudit CNN).

Ainsi, à l'issue de l'étape (b), on estime que chaque région d'intérêt sélectionnée contient un trait biométrique, et constitue donc une « détection » de ce trait biométrique. En d'autres termes, l'étape (b) consiste à identifier les régions d'intérêt candidates les plus susceptibles de contenir un trait biométrique et de supprimer les autres, et ainsi de conclure.

Cette étape de sélection peut se faire de n'importe quelle façon connue et YOLO contient déjà un tel bloc de filtrage, mettant en œuvre une sélection appelée NMS (Non-Maximal Suppression). En particulier :
- on peut supprimer toutes régions d'intérêt candidates présentant dans leur vecteur de représentation un score d'objectivité inférieur à un seuil prédéterminé (par exemple 0.25) ;
- et/ou parmi des « groupes » de régions d'intérêt candidates susceptibles de contenir un même trait biométrique (i.e. sensiblement coïncidantes, on voit par exemple sur la figure 3a qu'à chaque empreinte on a groupes d'une dizaines de boites différentes englobant de manière plus ou moins proche cette empreinte), garder celle avec le score d'objectivité le plus élevé. A noter qu'on peut utiliser comme critère pour constituer ces groupes de régions d'intérêt candidates le critère de Jaccard, appelé aussi « Intersection over union » (loU) : si deux régions d'intérêt candidates présentent un critère de Jaccard supérieur à un seuil prédéterminé (par exemple 0.4) alors elles sont susceptibles de contenir un même trait biométrique ;
- on peut faire plusieurs tours en faisant varier les seuils.

Dans un mode de réalisation, le nombre de traits biométriques à détecter dans l'image d'entrée est connu (par exemple quatre si c'est une image des doigts long d'une main ou deux si ce sont les pouces), et on peut met en œuvre l'étape (b) jusqu'à réduire le nombre de régions sélectionnées à ce nombre, à plus ou moins un facteur près (par exemple on peut autoriser un doigt en plus).

Dans un mode réalisation, on tient compte à l'étape (c) des classes potentielles de trait biométriques (et plus précisément des scores de probabilité associés) en faisant l'hypothèse que l'image d'entrée ne peut pas comporter simultanément deux traits biométriques de la même catégorie (il ne peut pas y avoir deux index gauches par exemple).

### Estimation de qualité

La présente méthode améliore sensiblement la capacité à détecter au mieux les traits biométriques, i.e. à avoir les boites englobantes les mieux choisies et les plus réalistes, comme l'on voit par exemple sur la **Figure 3b****.**

Des tests ont été mis en œuvre sur une base d'apprentissage composée de 30000 images contenant soit des images de 4 doigts (main gauche ou droite) ou de deux doigts (pouces mains gauche et droite), à une résolution de 500 dpi.

Pour améliorer la robustesse du CNN, des augmentations des données d'apprentissage ont été effectuées, et notamment des rotations ont été appliquées à certaines images et des fonds ont été rajoutés à d'autres images (tâches, écrits, etc.) afin de rendre le réseau capable d'opérer dans une grande diversité de conditions.

Les résultats montrent que tous les doigts présents dans les images de test sont toujours correctement détectés avec une bonne précision, et de plus le réseau est robuste à l'orientation. On note également que le système gère très bien des doigts « en trop » ou « manquants » si par exemple la personne a mal positionné ses mains.

Cependant, comme l'on voit sur ladite Figure 3b, il reste possible que par erreur on détecte encore des phalanges comme des traits biométriques.

En fait, on constate que les scores d'objectivité des phalanges ou traces sont en moyenne proches de ceux des doigts dégradés (jusqu'à 0.5), tandis que les doigts de très bonne qualité ont en moyenne des scores supérieurs à 0.7, le maximum étant 1. Il est donc difficile de distinguer les phalanges des doigts dégradés en ne se basant que sur le score d'objectivité (si on met un seuil trop haut ou si on impose un nombre de détections trop bas on va perdre des doigts).

Ainsi, de manière préférée, l'étape (b) comprend, pour tout ou partie des régions d'intérêts candidates (il est possible d'avoir déjà supprimé celles avec le score d'objectivité le plus bas), l'estimation d'un score de qualité de la région d'intérêt candidate, ledit score étant représentatif de la probabilité que ladite région d'intérêt candidate représente un trait biométrique, indépendamment du score d'objectivité déjà connu.

Plus précisément, on « recadre » l'image d'entrée à la région d'intérêt et on effectue en parallèle un traitement de vérification qu'elle contient bien un trait biométrique. Par exemple, on utilise un classifieur qui renvoie un score de probabilité, ce score étant utilisé comme score de qualité.

On peut alors mettre en œuvre la sélection des régions d'intérêt à garder, cette fois sur la base soit directement du score de qualité en lieu et place du score d'objectivité, soit sur la base d'une combinaison des deux (leur moyenne par exemple).

Comme l'on voit dans la **Figure 3c****,** cela permet d'exclure très efficacement les fausses détections telles que les phalanges ou les traces, et le résultat de détection est parfait.

### Vérification d'orientation

La dernière difficulté qui peut subsister est une erreur ponctuelle d'orientation.

Plus précisément, il arrive qu'une boite ait l'air parfaitement bien placée, mais s'avère en fait « à l'envers ». Plus précisément, il y a une erreur d'orientation d'environ 180° qui fait que le haut et le bas de la région d'intérêt sont inversés. En effet, une empreinte digitale est approximativement de forme ovale, et on comprend qu'un ovale retourné d'un demi-tour (i.e. 180°) a toujours une forme ovale ce qui explique qu'une empreinte à l'envers peut encore être reconnue par un CNN tel que YOLO comme une empreinte, ce qui ne serait pas le cas pour une rotation d'un angle plus petit ou plus grand. Une telle erreur de 180° est susceptible d'arriver en particulier lorsque toute l'image est retournée (main posée à l'envers sur le capteur).

A ce titre, l'étape (b) peut également comprendre, pour tout ou partie des régions d'intérêts candidates (il est à nouveau possible d'avoir déjà supprimé celles avec le score d'objectivité le plus bas), l'estimation d'une valeur d'orientation du trait biométrique contenu dans la région d'intérêt candidate, indépendamment de la valeur θ d'orientation de la région d'intérêt déjà connue. On rappelle qu'il s'agit cette fois d'estimer, dans le référentiel de la région d'intérêt, l'écart entre l'orientation du trait biométrique et l'orientation optimale. Normalement, si la valeur θ bien choisie, cette valeur d'orientation du trait biométrique doit être proche de 0 car le trait biométrique devrait être bien orienté dans la région d'intérêt, de sorte que la valeur d'orientation du trait biométrique peut être vue comme une estimation de l'erreur sur la valeur d'orientation de la région d'intérêt.

On peut ainsi « corriger » la valeur d'orientation de la région d'intérêt en y ajoutant la valeur d'orientation du trait biométrique contenu dans cette région d'intérêt, par exemple si cette dernière est supérieure à un seuil ou dans un intervalle.

Comme avant, on peut « recadrer » l'image d'entrée à la région d'intérêt et on effectue en parallèle un traitement de calcul de l'orientation. Par exemple, on connait des CNN dédiés capables de classifier une empreinte selon divers intervalles de valeur d'orientation, voir demande FR3088467.

Si on obtient comme valeur d'orientation du trait biométrique une valeur proche de 180° (par exemple dans un intervalle [90°, 270°]), on sait qu'on est à l'envers et on retourne la région d'intérêt candidate (en ajoutant comme expliqué cette dernière valeur à la valeur d'orientation de la région d'intérêt).

### Procédé d'apprentissage

Comme expliqué, le serveur 1 stocke une base de données d'apprentissage déjà annotées, i.e. un ensemble d'images sur lesquelles les traits biométriques sont déjà détectés (par opposition aux images dites d'entrée que l'on cherche justement à traiter avec le présent procédé).

Comme l'on voit sur la figure 2, le procédé commence avantageusement par une étape (a0) d'apprentissage, par les moyens de traitement de données 11 du serveur 1, à partir de ladite base d'images de traits biométriques déjà annotées, de paramètres dudit CNN, et en particulier du bloc d'extraction de caractéristiques (le bloc de filtrage peut être prédéterminé et donc ne pas avoir de paramètres à apprendre). Par « annoté », on entend que des régions d'intérêt dites de référence contenant les traits biométriques (et plus précisément leurs vecteurs de représentation) sont déjà connues pour les images d'apprentissage. On note que, partant d'une base traditionnelle, cela impose de rajouter l'orientation à chaque région d'intérêt de référence, mais on peut le faire de manière automatique au moyen par exemple d'un CNN adapté (voir plus haut).

De manière classique, on utilise pour l'apprentissage une fonction de coût permettant de mesurer l'écart entre les prédictions du CNN (les régions d'intérêt candidates) et la vérité terrain (régions d'intérêt de référence) pour une image d'apprentissage. Plus précisément, la fonction de coût permet de mesurer une « distance » entre les régions d'intérêt candidates identifiées lors de l'apprentissage et les régions d'intérêt de référence attendues.

Cependant, ce qui est ici spécifique est que la fonction de coût doit comprendre un terme de régression sur l'orientation des régions d'intérêt par rapport à une fonction de coût standard. Par exemple, on peut partir de la fonction de coût connue de YOLO et y rajouter un tel terme.

De façon préférée ladite fonction de coût comprend :
- un premier terme de régression sur l'au moins une valeur de position de la région d'intérêt candidate ;
- un deuxième terme de régression sur l'au moins une valeur de taille de la région d'intérêt candidate ;
- un troisième terme de régression sur le score d'objectivité de la région d'intérêt candidate ;
- ledit quatrième terme de régression sur l'orientation de la région d'intérêt candidate ;
- un éventuel cinquième terme de régression sur une classe de la région d'intérêt candidate (si le CNN fait de la classification).

L'homme du métier pourra utiliser toute fonction de coût de son choix en l'adaptant à la présente invention en y rajoutant un terme de régression sur l'orientation.

Dans l'exemple de YOLO, avec des boites englobantes comme régions d'intérêt (vecteur [x, y, w, h, θ, C, P(c₁)... P(cₙ)]) on peut prendre les termes suivants (la fonction de cout en est la somme) :
[math 1] ${α}_{coord} {\sum }_{i = 0}^{{S}^{2}} {\sum }_{j = 0}^{B} {1}_{ij}^{obj} \left[{\left({x}_{i}-{\hat{x}}_{i}\right)}^{2}+{\left({y}_{i}-{\hat{y}}_{i}\right)}^{2}\right]$ [math 2] ${α}_{coord} {\sum }_{i = 0}^{{S}^{2}} {\sum }_{j = 0}^{B} {1}_{ij}^{obj} \left[{\left(\sqrt{{w}_{i}}-\sqrt{{\hat{w}}_{i}}\right)}^{2}+{\left(\sqrt{{h}_{i}}-\sqrt{{\hat{h}}_{i}}\right)}^{2}\right]$ [math 3] ${\sum }_{i = 0}^{{S}^{2}} {1}_{i}^{obj} {\sum }_{c ∈ classes} {\left({P}_{i}\left(c\right)-{\hat{P}}_{i}\left(c\right)\right)}^{2}$ [math 4] ${α}_{angle} {\sum }_{i = 0}^{{S}^{2}} {\sum }_{j = 0}^{B} {1}_{ij}^{obj} \left[{\left(sin \left({θ}_{i}\right)-sin \left({\hat{θ}}_{i}\right)\right)}^{2}+{\left(cos \left({θ}_{i}\right)-cos \left({\hat{θ}}_{i}\right)\right)}^{2}\right]$ [math 5] ${\sum }_{i = 0}^{{S}^{2}} {\sum }_{j = 0}^{B} {1}_{ij}^{obj} {\left({C}_{i}-{\hat{C}}_{i}\right)}^{2} + {\sum }_{i = 0}^{{S}^{2}} {\sum }_{j = 0}^{B} {1}_{ij}^{noobj} {\left({C}_{i}-{\hat{C}}_{i}\right)}^{2}$ Les valeurs avec ou sans « ^ » désignent respectivement la région d'intérêt candidate et la région d'intérêt de référence (vérité terrain), avec α_{coord} le poids donné aux premier et deuxième termes (régression sur la position et la taille), et α_{angle} le poids sur le quatrième terme (régression sur l'orientation). La valeur de S² indique comme expliqué le nombre de cellules (grille de dimension SxS), B est le nombre de boîtes dans une cellule (1 dans notre cas par exemple). On utilise deux masques (1ᵢ^{obj} et 1ᵢ^{noobj}) pour chaque cellule. Si une cellule contient un objet 1ᵢ^{obj} vaut 1, et 0 autrement ; si une cellule ne contient pas d'objet 1ᵢ^{noobj} vaut 1 sinon 0.

Le CNN appris peut être stocké le cas échéant sur des moyens de stockage de données 22 du client 2 pour utilisation en détection. A noter que le même CNN peut être embarqué sur de nombreux clients 2, un seul apprentissage est nécessaire.

Selon un troisième aspect, l'invention peut concerner le procédé d'apprentissage des paramètres du bloc d'extraction de caractéristiques du CNN en lui-même, mis en œuvre par les moyens de traitement de données 11 du serveur 1, pour détection d'au moins un trait biométrique visible sur une image d'entrée (i.e. pour mise en œuvre du procédé selon le premier aspect).

Ce procédé est comme expliqué mis en œuvre à partir d'une base d'images d'apprentissage sur lesquelles les traits biométriques sont déjà détectés, le bloc d'extraction de caractéristiques générant pour une image d'entrée une pluralité de vecteurs de représentation chacun définissant une région d'intérêt candidate de ladite image d'entrée contenant potentiellement un trait biométrique.

En particulier, le procédé utilise une fonction de coût comprenant un terme de régression sur l'orientation de la région d'intérêt candidate (voir avant), le vecteur de représentation d'une région d'intérêt candidate comprenant au moins une valeur de position de la région d'intérêt candidate, au moins une valeur de taille de la région d'intérêt candidate, une valeur d'orientation de la région d'intérêt candidate, et un score d'objectivité de la région d'intérêt candidate.

### Identification/authentification

Une fois la sélection (b) mis en œuvre, le procédé selon le premier aspect peut comprendre une étape (c) dans laquelle la ou les régions d'intérêt sélectionnées de l'image d'entrée peuvent être traitées de sorte à extraire des caractéristiques recherchées du ou des traits biométriques visibles dans ladite image d'entrée, lesquelles peuvent notamment comprendre la position et/ou l'orientation de minuties dans le cas d'empreintes digitales. En d'autres termes, l'étape (c) est une étape de traitement du ou des traits biométriques détectés.

L'étape (c) est avantageusement mise en œuvre pour chaque trait biométrique isolément.

De façon préférée, le procédé comprend en outre une étape (d) d'identification ou d'authentification d'au moins un individu par comparaison des caractéristiques recherchées extraites du (ou de chaque) trait biométrique visible par ladite image d'entrée, avec les caractéristiques de traits biométriques de référence, qui pourra être mise en œuvre de n'importe quelle façon connue de l'homme du métier.

Par exemple, le client 2 peut stocker les caractéristiques des empreintes d'une ou plusieurs personnes inscrites dans un fichier de police comme empreintes de référence, de sorte à pouvoir identifier la personne ayant laissé une empreinte latente : si les caractéristiques extraites correspondent à celles attendues d'un individu connu, l'identité de celui-ci est transmise aux forces de police.

Alternativement, le client 2 peut envoyer les caractéristiques extraites à une base de données distante desdites caractéristiques de traits biométriques de référence, pour identification de l'individu.

A noter que les étapes (c) et/ou (d) peuvent être mises en œuvre comme une étape de classification d'un trait biométrique isolé, par exemple via un ou plusieurs CNN dédiés, et le cas échéant comprendre des traitements d'amélioration des traits isolés, voir notamment la demande FR3088467.

### Produit programme d'ordinateur

Selon un troisième et un quatrième aspects, l'invention concerne un produit programme d'ordinateur comprenant des instructions de code pour l'exécution (en particulier sur les moyens de traitement de données 11, 21 du serveur 1 et/ou du client 2) d'un procédé de détection d'au moins un trait biométrique visible sur une image d'entrée, ou d'apprentissage de paramètres d'un réseau de neurones à convolution, CNN, ainsi que des moyens de stockage lisibles par un équipement informatique (une mémoire 12, 22 du serveur 1 et/ou du client 2) sur lequel on trouve ce produit programme d'ordinateur.

## Revendications

1. Procédé de détection d'au moins un trait biométrique visible sur une image d'entrée, au moyen d'un réseau de neurones à convolution, CNN, le procédé étant **caractérisé en ce qu'**il comprend la mise en œuvre, par des moyens de traitement de données (21) d'un client (2), d'étapes de :
(a) Génération, au moyen d'un bloc d'extraction de caractéristiques dudit CNN, d'une pluralité de vecteurs de représentation chacun définissant une région d'intérêt candidate de ladite image d'entrée contenant potentiellement un trait biométrique, chaque région d'intérêt candidate formant une boite englobante, le vecteur de représentation d'une région d'intérêt candidate comprenant au moins une valeur de position de la région d'intérêt candidate, au moins une valeur de taille de la région d'intérêt candidate, une valeur d'orientation de la région d'intérêt candidate, et un score d'objectivité de la région d'intérêt candidate ;
(b) Sélection, au moyen d'un bloc de filtrage dudit CNN, d'au moins une région d'intérêt parmi lesdites régions candidates en fonction de leurs vecteurs de représentation, en particulier de leur score d'objectivité.

2. Procédé selon la revendication 1, dans lequel lesdites traits biométriques sont choisis parmi des empreintes digitales, des visages et des iris, en particulier des empreintes digitales.

3. Procédé selon l'une des revendications 1 et 2, dans lequel le vecteur de représentation d'une région d'intérêt candidate comprend deux valeurs de position de la région d'intérêt candidate qui sont les coordonnées du centre de la boite englobante, deux valeurs de taille de la région d'intérêt candidate qui sont sa hauteur et sa largeur.

4. Procédé selon l'une des revendications 1 à 3, dans laquelle le vecteur de représentation d'une région d'intérêt candidate comprend en outre, pour au moins une classe possible du trait biométrique, un score de probabilité d'appartenance du trait biométrique de la région d'intérêt à ladite classe.

5. Procédé selon les revendications 2 et 4 en combinaison, dans lequel lesdites classes désignent les doigts des mains.

6. Procédé selon l'une des revendications 1 à 5, dans lequel l'étape (b) comprend la suppression des régions d'intérêt candidates présentant dans leur vecteur de représentation un score d'objectivité inférieur à un seuil prédéterminé ; et/ou la sélection, parmi au moins un groupe de régions d'intérêt candidates susceptibles de contenir un même trait biométrique, de la région d'intérêt candidate avec le score d'objectivité le plus élevé ; deux région d'intérêt candidate étant en particulier susceptibles de contenir un même trait biométrique si elles présentent un critère de Jaccard supérieur à un seuil prédéterminé.

7. Procédé selon la revendication 6, dans lequel le vecteur de représentation d'une région d'intérêt candidate comprend deux valeurs de position de la région d'intérêt candidate qui sont les coordonnées du centre de la boite englobante, deux valeurs de taille de la région d'intérêt candidate qui sont sa hauteur et sa largeur.

8. Procédé selon l'une des revendications 1 à 7, dans lequel l'étape (b) comprend, pour au moins une région d'intérêt candidate, l'estimation d'un score de qualité de la région d'intérêt candidate, ledit score étant représentatif de la probabilité que ladite région d'intérêt candidate représente un trait biométrique, indépendamment du score d'objectivité déjà connu ; ladite sélection d'au moins une région d'intérêt parmi lesdites régions candidates étant en fonction dudit score de qualité.

9. Procédé selon l'une des revendications 1 à 8, dans lequel l'étape (b) comprend, pour au moins une région d'intérêt candidate, l'estimation d'une deuxième valeur d'orientation de la région d'intérêt candidate, indépendamment de la première valeur d'orientation déjà connue, de sorte à corriger ladite première valeur.

10. Procédé selon l'une des revendications 1 à 9, comprenant une étape (a0) préalable d'apprentissage, par des moyens de traitement de données (11) d'un serveur (1), des paramètres du bloc d'extraction de caractéristiques dudit CNN, à partir d'une base d'images d'apprentissage sur lesquelles les traits biométriques sont déjà détectés, en utilisant une fonction de coût comprenant un terme de régression sur l'orientation de la région d'intérêt candidate.

11. Procédé selon la revendication 10, dans lequel ladite fonction de coût comprend :
- un premier terme de régression sur l'au moins une valeur de position de la région d'intérêt candidate ;
- un deuxième terme de régression sur l'au moins une valeur de taille de la région d'intérêt candidate ;
- un troisième terme de régression sur le score d'objectivité de la région d'intérêt candidate ;
- un quatrième terme de régression sur l'orientation de la région d'intérêt candidate ;
- un éventuel cinquième terme de régression sur une classe de la région d'intérêt candidate.

12. Procédé d'apprentissage des paramètres d'un bloc d'extraction de caractéristiques d'un réseau de neurones à convolution, CNN, par des moyens de traitement de données (11) d'un serveur (1), pour détection d'au moins un trait biométrique visible sur une image d'entrée, le procédé étant mis en œuvre à partir d'une base d'images d'apprentissage sur lesquelles les traits biométriques sont déjà détectés, le bloc d'extraction de caractéristiques générant pour une image d'entrée une pluralité de vecteurs de représentation chacun définissant une région d'intérêt candidate de ladite image d'entrée contenant potentiellement un trait biométrique ; le procédé étant **caractérisé en ce qu'**il utilise une fonction de coût comprenant un terme de régression sur l'orientation de la région d'intérêt candidate, le vecteur de représentation d'une région d'intérêt candidate comprenant au moins une valeur de position de la région d'intérêt candidate, au moins une valeur de taille de la région d'intérêt candidate, une valeur d'orientation de la région d'intérêt candidate, et un score d'objectivité région d'intérêt candidate.

13. Produit programme d'ordinateur comprenant des instructions de code pour l'exécution d'un procédé selon l'une des revendications 1 à 12 de détection d'au moins un trait biométrique visible sur une image d'entrée, ou d'apprentissage de paramètres d'un réseau de neurones à convolution, CNN, lorsque ledit programme est exécuté sur un ordinateur.

14. Moyen de stockage lisible par un équipement informatique sur lequel un produit programme d'ordinateur comprenant des instructions de code pour l'exécution d'un procédé selon l'une des revendications 1 à 12 de détection d'au moins un trait biométrique visible sur une image d'entrée, ou d'apprentissage de paramètres d'un réseau de neurones à convolution, CNN, lorsque ledit programme est exécuté sur un ordinateur.

## Patentansprüche

1. Verfahren zum Erkennen mindestens eines auf einem Eingabebild sichtbaren biometrischen Merkmals mittels eines konvolutionellen neuronalen Netzes (CNN), wobei das Verfahren **dadurch gekennzeichnet ist, dass** es die Durchführung folgender Schritte durch Datenverarbeitungsmittel (21) eines Clients (2) umfasst:
**(a)** Erzeugung einer Vielzahl von Darstellungsvektoren mittels eines Merkmalsextraktionsblocks des genannten CNN, wobei jeder Darstellungsvektor einen Kandidaten-Interessensbereich des genannten Eingabebildes definiert, der potenziell ein biometrisches Merkmal enthält, wobei jeder Kandidaten-Interessensbereich eine umschließende Box bildet und der Darstellungsvektor eines Kandidaten-Interessensbereichs mindestens einen Positionswert des Kandidaten-Interessensbereichs, mindestens einen Größenwert des Kandidaten-Interessensbereichs, einen Orientierungswert des Kandidaten-Interessensbereichs und einen Objektivitätswert des Kandidaten-Interessensbereichs umfasst;
**(b)** Auswahl mindestens eines Bereichs von Interesse aus den genannten Kandidatenbereichen mittels eines Filterblocks des genannten CNN auf der Grundlage ihrer Darstellungsvektoren, insbesondere ihres Objektivitätswerts.

2. Verfahren nach Anspruch 1, wobei die biometrischen Merkmale aus Fingerabdrücken, Gesichtern und Irisdaten, insbesondere Fingerabdrücken, ausgewählt werden.

3. Verfahren nach einem der Ansprüche 1 und 2, wobei der Darstellungsvektor eines Kandidaten-Interessenbereichs zwei Positionswerte des Kandidaten-Interessenbereichs, nämlich die Koordinaten des Mittelpunkts der umschließenden Box, sowie zwei Größenwerte des Kandidaten-Interessenbereichs, nämlich dessen Höhe und Breite, umfasst.

4. Verfahren nach einem der Ansprüche 1 bis 3, wobei der Darstellungsvektor eines Kandidaten-Interessenbereichs ferner für mindestens eine mögliche Klasse des biometrischen Merkmals einen Wahrscheinlichkeitswert für die Zugehörigkeit des biometrischen Merkmals des Interessenbereichs zu dieser Klasse umfasst.

5. Verfahren nach den Ansprüchen 2 und 4 in Kombination, wobei die Klassen die Finger der Hände bezeichnen.

6. Verfahren nach einem der Ansprüche 1 bis 5, wobei der Schritt (b) das Aussortieren der Kandidaten-Interessenbereiche umfasst, deren Darstellungsvektor einen Objektivitätswert aufweist, der unter einem vorgegebenen Schwellenwert liegt; und/oder die Auswahl des Kandidaten-Interessenbereichs mit dem höchsten Objektivitätswert aus mindestens einer Gruppe von Kandidaten-Interessenbereichen, die möglicherweise dasselbe biometrische Merkmal enthalten; wobei insbesondere zwei Kandidaten-Interessenbereiche dasselbe biometrische Merkmal enthalten können, wenn sie einen Jaccard-Koeffizienten aufweisen, der über einem vorgegebenen Schwellenwert liegt.

7. Verfahren nach Anspruch 6, wobei der Darstellungsvektor eines Kandidaten-Interessenbereichs zwei Positionswerte des Kandidaten-Interessenbereichs, nämlich die Koordinaten des Mittelpunkts der umschließenden Box, sowie zwei Größenwerte des Kandidaten-Interessenbereichs, nämlich dessen Höhe und Breite, umfasst.

8. Verfahren nach einem der Ansprüche 1 bis 7, wobei der Schritt (b) für mindestens einen Kandidaten-Interessensbereich die Schätzung eines Qualitätswerts des Kandidaten-Interessensbereichs umfasst, wobei dieser Wert die Wahrscheinlichkeit widerspiegelt, dass der Kandidaten-Interessensbereich ein biometrisches Merkmal darstellt, unabhängig von dem bereits bekannten Objektivitätswert; wobei die Auswahl mindestens eines interessierenden Bereichs aus den Kandidatenbereichen in Abhängigkeit von dem Qualitätswert erfolgt.

9. Verfahren nach einem der Ansprüche 1 bis 8, wobei der Schritt (b) für mindestens einen Kandidaten-Interessenbereich die Schätzung eines zweiten Orientierungswerts des Kandidaten-Interessenbereichs umfasst, unabhängig von dem bereits bekannten ersten Orientierungswert, um den ersten Wert zu korrigieren.

10. Verfahren nach einem der Ansprüche 1 bis 9, umfassend einen vorangehenden Lernschritt (a0) durch Datenverarbeitungsmittel (11) eines Servers (1), der Parameter des Merkmalsextraktionsblocks des genannten CNN aus einer Datenbank mit Trainingsbildern, auf denen die biometrischen Merkmale bereits erkannt wurden, unter Verwendung einer Kostenfunktion, die einen Regressionsterm bezüglich der Ausrichtung des Kandidaten-Interessenbereichs umfasst.

11. Verfahren nach Anspruch 10, wobei die Kostenfunktion umfasst:
- einen ersten Regressionsterm über den mindestens einen Positionswert des Kandidaten-Interessenbereichs;
- einen zweiten Regressionsterm bezüglich des mindestens einen Größenwerts des Kandidaten-Interessenbereichs;
- einen dritten Regressionsterm bezüglich des Objektivitätswerts des Kandidaten-Interessenbereichs;
- einen vierten Regressionsterm über die Ausrichtung des Kandidaten-Interessenbereichs;
- gegebenenfalls einen fünften Regressionsterm über eine Klasse des Kandidaten-Interessenbereichs.

12. Verfahren zum Trainieren der Parameter eines Merkmalsextraktionsblocks eines konvolutionellen neuronalen Netzes (CNN) durch Datenverarbeitungsmittel (11) eines Servers (1) zur Erkennung mindestens eines auf einem Eingabebild sichtbaren biometrischen Merkmals, wobei das Verfahren auf der Grundlage einer Datenbank mit Trainingsbildern durchgeführt wird, auf denen die biometrischen Merkmale bereits erkannt wurden, wobei der Merkmalsextraktionsblock für ein Eingabebild eine Vielzahl von Darstellungsvektoren erzeugt, von denen jeder einen Kandidaten-Interessensbereich des genannten Eingabebildes definiert, der potenziell ein biometrisches Merkmal enthält; wobei das Verfahren **dadurch gekennzeichnet ist, dass** es eine Kostenfunktion verwendet, die einen Regressionsterm bezüglich der Ausrichtung des Kandidaten-Interessenbereichs umfasst, wobei der Darstellungsvektor eines Kandidaten-Interessenbereichs mindestens einen Positionswert des Kandidaten-Interessenbereichs, mindestens einen Größenwert des Kandidaten-Interessenbereichs, einen Orientierungswert des Kandidaten-Interessenbereichs und einen Objektivitätswert des Kandidaten-Interessenbereichs umfasst.

13. Computerprogrammprodukt, das Codebefehle zur Ausführung eines Verfahrens gemäß einem der Ansprüche 1 bis 12 zur Erkennung mindestens eines auf einem Eingabebild sichtbaren biometrischen Merkmals oder zum Trainieren von Parametern eines konvolutionellen neuronalen Netzes (CNN) umfasst, wenn das Programm auf einem Computer ausgeführt wird.

14. Von einer Computereinrichtung lesbares Speichermedium, auf dem sich ein Computerprogramm befindet, das Codeanweisungen zur Ausführung eines Verfahrens gemäß einem der Ansprüche 1 bis 12 zur Erkennung mindestens eines sichtbaren biometrischen Merkmals in einem Eingabebild oder zum Trainieren von Parametern eines konvolutionellen neuronalen Netzes (CNN) enthält, wenn das Programm auf einem Computer ausgeführt wird.

## Claims

1. A method for detecting at least one visible biometric feature in an input image, using a convolutional neural network (CNN), the method being **characterised in that** it comprises the execution, by data processing means (21) of a client (2), of the following steps:
**(a)** Generating, by means of a feature extraction block of said CNN, a plurality of representation vectors, each defining a candidate region of interest , of said input image potentially containing a biometric feature, each candidate region of interest forming a bounding box, the representation vector of a candidate region of interest comprising at least one position value of the candidate region of interest, at least one size value of the candidate region of interest, an orientation value of the candidate region of interest, and an objectivity score of the candidate region of interest;
**(b)** Selecting, by means of a filtering block of said CNN, at least one region of interest from among said candidate regions based on their representation vectors, in particular their objectivity score.

2. A method according to claim 1, wherein said biometric features are selected from fingerprints, faces and irises, in particular fingerprints.

3. A method according to one of claims 1 and 2, wherein the representation vector of a candidate region of interest comprises two position values of the candidate region of interest, which are the coordinates of the centre of the bounding box, and two size values of the candidate region of interest, which are its height and width.

4. A method according to any one of claims 1 to 3, wherein the representation vector of a candidate region of interest further comprises, for at least one possible class of the biometric feature, a probability score indicating the likelihood that the biometric feature of the region of interest belongs to that class.

5. A method according to claims 2 and 4 in combination, wherein said classes refer to the fingers of the hands.

6. A method according to any one of claims 1 to 5, wherein step (b) comprises removing candidate regions of interest whose representation vector has an objectivity score below a predetermined threshold; and/or selecting, from at least one group of candidate regions of interest likely to contain the same biometric feature, the candidate region of interest with the highest objectivity score; in particular, two candidate regions of interest are likely to contain the same biometric feature if they have a Jaccard coefficient greater than a predetermined threshold.

7. A method according to claim 6, wherein the representation vector of a candidate region of interest comprises two position values of the candidate region of interest, which are the coordinates of the centre of the bounding box, and two size values of the candidate region of interest, which are its height and width.

8. A method according to any one of claims 1 to 7, wherein step (b) comprises, for at least one candidate region of interest, estimating a quality score for the candidate region of interest, said score being representative of the probability that said candidate region of interest represents a biometric feature, independently of the already known objectivity score; said selection of at least one region of interest from among said candidate regions being based on said quality score.

9. A method according to any one of claims 1 to 8, wherein step (b) comprises, for at least one candidate region of interest, estimating a second orientation value for the candidate region of interest, independently of the first orientation value already known, so as to correct said first value.

10. A method according to any one of claims 1 to 9, comprising a preliminary training step (a0), carried out by data processing means (11) of a server (1), the parameters of the feature extraction block of said CNN, from a database of training images on which biometric features have already been detected, using a cost function comprising a regression term relating to the orientation of the candidate region of interest.

11. A method according to claim 10, wherein said cost function comprises:
- a first regression term relating to the at least one positional value of the candidate region of interest;
- a second regression term relating to the at least one size value of the candidate region of interest;
- a third regression term relating to the objectivity score of the candidate region of interest;
- a fourth regression term relating to the orientation of the candidate region of interest;
- an optional fifth regression term relating to a class of the candidate region of interest.

12. A method for training the parameters of a feature extraction block of a convolutional neural network (CNN) by data processing means (11) of a server (1), for detecting at least one biometric feature visible in an input image, the method being implemented on the basis of a database of training images in which the biometric features have already been detected, the feature extraction block generating, for an input image, a plurality of representation vectors, each defining a candidate region of interest of said input image potentially containing a biometric feature; the method being **characterised in that** it uses a cost function comprising a regression term relating to the orientation of the candidate region of interest, the representation vector of a candidate region of interest comprising at least one position value of the candidate region of interest, at least one size value of the candidate region of interest, an orientation value of the candidate region of interest, and an objectivity score of the candidate region of interest.

13. A computer program product comprising code instructions for executing a method according to any one of claims 1 to 12 for detecting at least one visible biometric feature in an input image, or for training parameters of a convolutional neural network (CNN), when said program is executed on a computer.

14. A computer-readable storage medium on which is stored a computer program comprising code instructions for executing a method according to one of claims 1 to 12 for detecting at least one visible biometric feature in an input image, or for training the parameters of a convolutional neural network (CNN), when said program is executed on a computer.
